# EUROPEAN PATENT SPECIFICATION

(11) **EP 0 519 657 B1**
(45) Date of publication and mention of the grant of the patent: **29.05.1996**
(21) Application number: 92305459.7
(22) Date of filing: 15.06.1992
(51) Int. Cl.: C08L 79/08, C08L 69/00, C08L 83/10

(54) **Ductile, non-halogenated flame retardant ternary blends of polyetherimide, siloxane polyetherimide copolymer and polycarbonate**
Duktile, halogenfreie flammhemmende ternäre Massen aus Polyetherimiden, Siloxan-Polyetherimide-Copolymeren und Polycarbonaten
Mélanges ternaires ignifugés non-halogénés ductiles de polyéthérimide, copolymère siloxane-polyéthérimide et polycarbonate

(30) Priority: 18.06.1991 US 716940
(43) Date of publication of application: 23.12.1992
(73) Proprietor: GENERAL ELECTRIC COMPANY, Schenectady, NY 12345 (US)
(72) Inventor: Glaser, Raymond Hans, Mount Vernon, Indiana 47620 (US)
(74) Representative: Pratt, Richard Wilson

(56) References cited:
- EP-A- 0 417 513
- US-A- 4 387 193
- US-A- 4 816 527
- US-A- 5 051 483

## Description

This invention relates to non-halogenated ternary polymer blends which are characterized by high impact strengths, good blow moldability, good injection moldability, amenability to thermoforming, and excellent flame retardant performance. The ternary polymer blends are particularly suited for the construction of various panels and parts for aircraft interiors.

Many applications, especially those in the transportation field, require that engineering thermoplastics be flame retardant. Polyetherimides, polycarbonates, siloxane polyetherimide copolymers, organopolysiloxane-polycarbonate copolymers and combinations thereof have been used in aircraft and automobile parts as well as for insulation for wiring. In addition to possessing advantageous physical and chemical properties, they exhibit good flame retardant properties. See, for example, U.S. patents 4,673,708, 4,629,759, 4,548,997, 4,468,506, 4,387,193, 4,390,665, 4,268,429 and 3,334,154.

The engineering thermoplastics that are in current use vary in their flame retardant properties and durability. Many do not meet the current standards for the flame resistance of construction materials used for the interior of transport category aircraft. Such standards are embodied in the 1986 amendments to Part 25 - Airworthiness Standards - Transport Category Airplanes of Title 14, Code of Federal Regulations. (See, 51 Federal Register 26206, July 21, 1986 and 51 Federal Register 28322, August 7, 1986). The flammability standards are based on heat calorimetry tests developed at Ohio State University. Such tests are described in the above-cited amendments to 14 C.F.R. Part 25 and are incorporated herein by reference.

A need continues to exist for engineering thermoplastics that have improved flame retardant properties and durability.

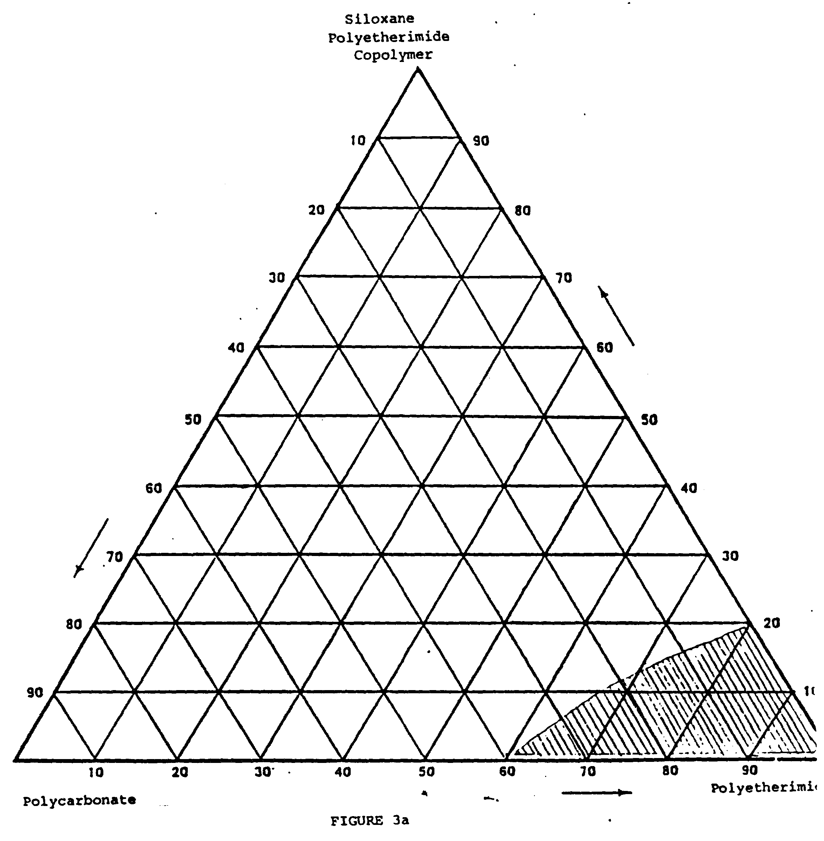

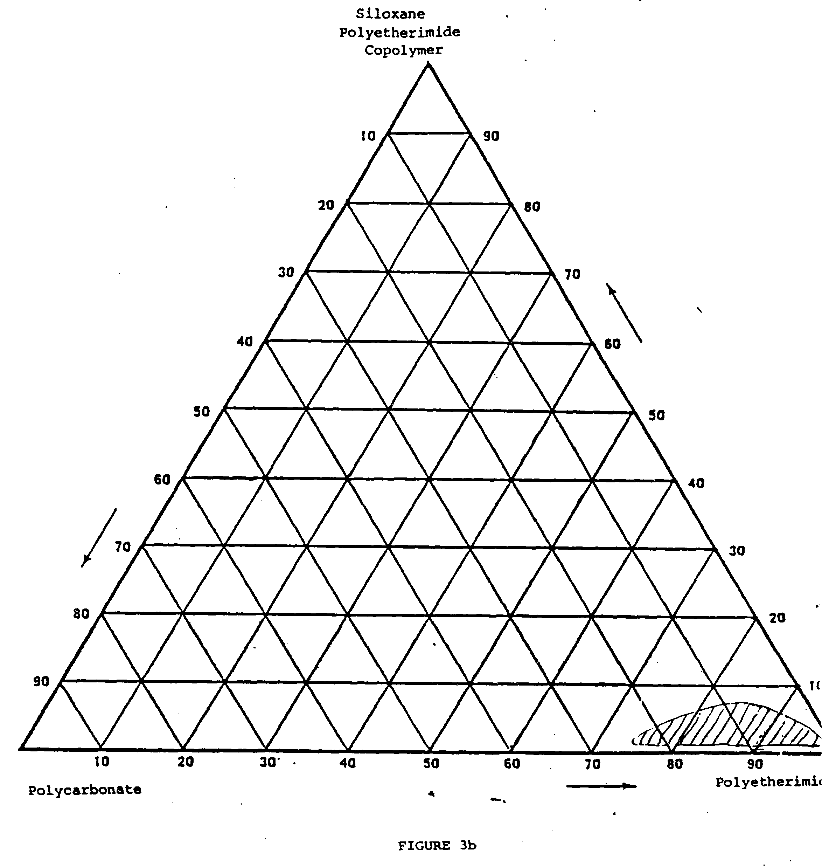

In accordance with the present invention, a novel non-halogenated ternary polymer blend consists essentially of a polyetherimide, a siloxane polyetherimide copolymer and a polycarbonate, wherein the relative proportions of the three components are substantially as illustrated in Fig. 3a of the drawings.

This ternary polymer blend has been found to possess the physical and chemical resistance properties important for applications as aircraft cabin interior components, automobile parts, insulation for wiring and the like. In particular, this ternary blend results in an unexpected improvement in flame resistant performance and ductility. Further, certain ternary blends of this invention meet or exceed the rigorous flammability standards that have been established for aircraft interior components.

Fig. 1 illustrates a transmission electron micrograph of an immiscible blend of 80 parts by weight polyetherimide/10 parts by weight siloxane polyetherimide copolymer/10 parts by weight polycarbonate.

Fig. 2 illustrates a transmission electron micograph of an immiscible blend of 10 parts by weight polyetherimide/80 parts by weight siloxane polyetherimide copolymer/10 parts by weight polycarbonate.

Fig. 3a illustrates a phase diagram for ternary blends of a polyetherimide, a siloxane polyetherimide copolymer and a polycarbonate, wherein the relative proportions of the three components are expressed as weight percentages. The shaded area of the graph represents the ternary blends of the present invention.

Fig. 3b illustrates a phase diagram for ternary blends of a polyetherimide, a siloxane polyetherimide copolymer and a polycarbonate, wherein the relative proportions of the three components are expressed as weight percentages. The shaded area of the graph represents preferred ternary blends of the present invention.

Fig. 4 illustrates impact test results for a ternary blend of a polyetherimide, and a siloxane polyetherimide in a weight ratio of 95/5 with varible proportions of a polycarbonate.

Fig. 5 illustrates peak heat release and ultimate elongation curves of a ternary blend of a polyetherimide and a siloxane polyetherimide in a weight ratio of 95/5 respectively with variable proportions of a polycarbonate.

The present invention relates to non-halogenated ternary polymer blends. More particularly, the invention relates to certain polyetherimide/siloxane polyetherimide copolymer/polycarbonate blends having unexpectedly and significantly high flame retardant performance and ductility.

The polyetherimides, siloxane polyetherimide copolymers and polycarbonates, blended in the proportions within the scope of this invention, are immiscible. Thus, in accordance with the invention, the polyetherimide, siloxane polyetherimide copolymer and polycarbonate are blended in proportions such that each polymeric component is uniformly distributed throughout the blend.

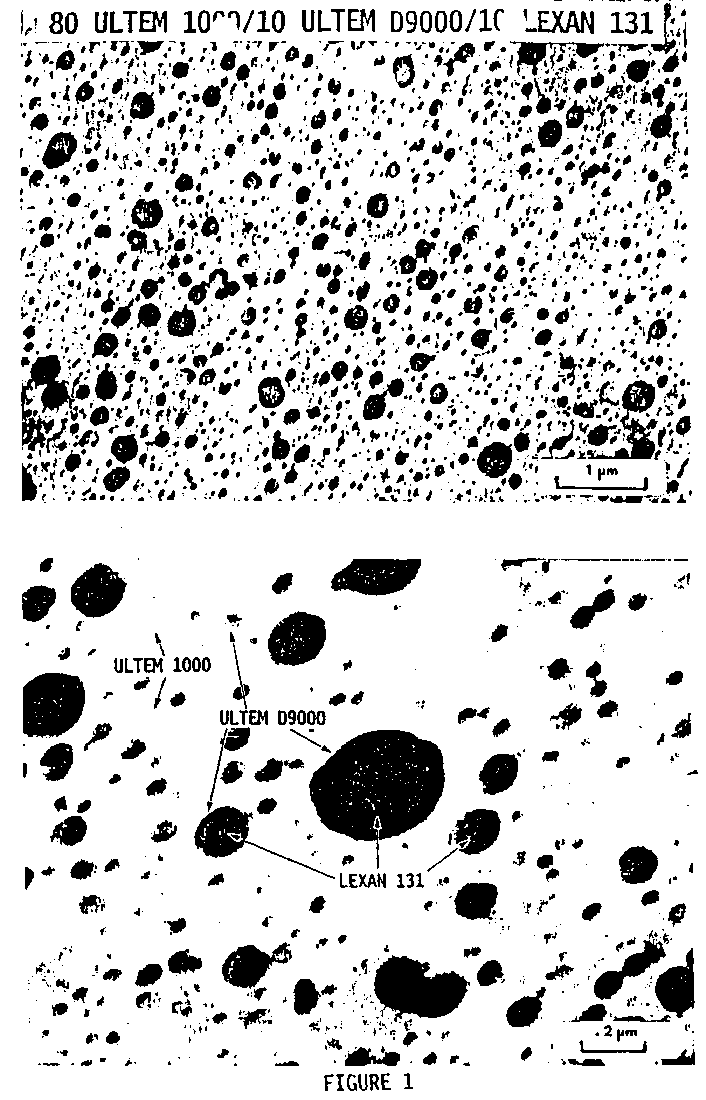

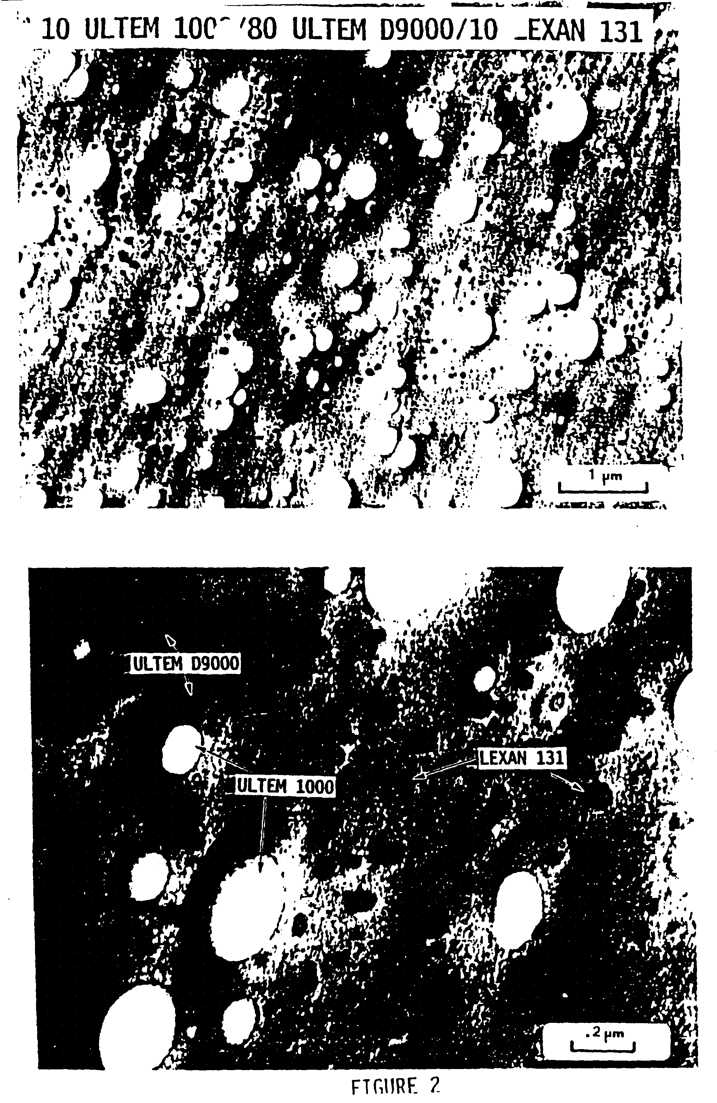

Figure 1 is a transmission electron micrograph of a blend of 80 parts by weight of ULTEM® 1000 grade of polyetherimide, 10 parts by weight of ULTEM® D9000 grade of siloxane polyetherimide copolymer and 10 parts by weight of LEXAN® 131 grade of polycarbonate. Figure 2 is a transmission electron micrograph of a blend of 10 parts by weight of ULTEM® 1000 grade of polyetherimide, 80 parts by weight of ULTEM® D9000 grade of siloxane polyetherimide copolymer and 10 parts by weight of LEXAN® 131 grade of polycarbonate. Both electron micrographs show that the siloxane polyetherimide copolymer coats the polyetherimide, separating it from the polycarbonate component. This microstructure was unexpected and may explain the high impact strengths and ductility of the polymer blends.

The polyetherimides used for preparing the blends of this invention contain repeating groups of the formula 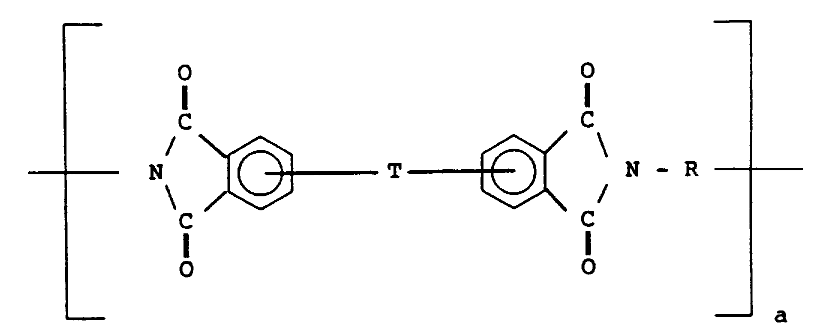 wherein "a" is an integer greater than 1, e.g., from 10 to 10,000 or more;
where T is -S-, -O-, 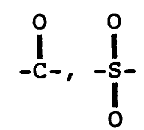 or CₓH₂ₓ or a group of the formula

-O-Z-O-

wherein the divalent bonds of the -O- or the -O-Z-O-group are in the 3,3'; 3,4'; 4,3', or the 4,4' positions; Z is a member of the class consisting of (A): 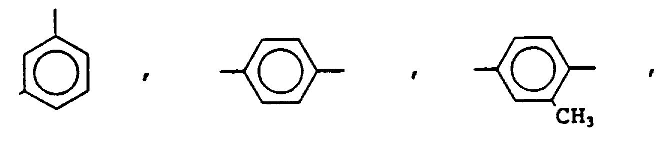 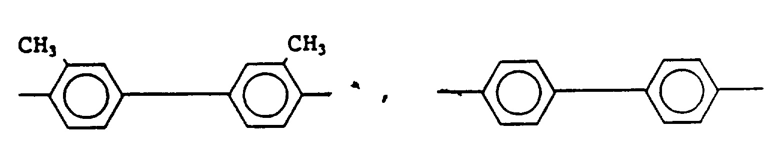 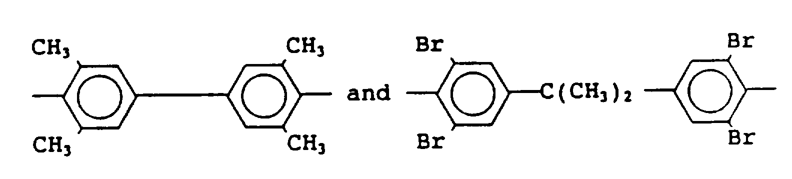 and (B) divalent organic radicals of the general formula 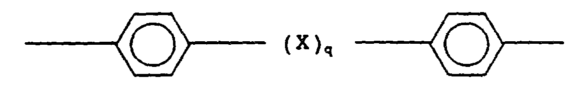 where X is a member selected from the group consisting of divalent radicals of the formulas 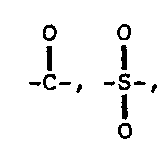 -O-, -S- and -C_{y}H_{2y}-
where y is an integer from 1 to about 5; and R is a divalent organic radical selected from the group consisting of (a) aromatic hydrocarbon radicals having from 6 to about 20 carbon atoms and halogenated derivatives thereof, (b) alkylene radicals having from 2 to about 20 carbon atoms, cycloalkylene radicals having from 3 to about 20 carbon atoms, and (c) divalent radicals of the general formula -S-, -O- 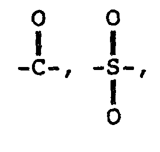 and -CₓH₂ₓ-
and x is an integer from 1 to about 5.

In one embodiment, the polyetherimide may be a copolymer which, in addition to the etherimide units described above, further contains polyimide repeating units of the formula 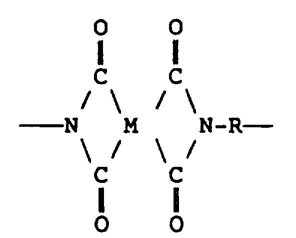 wherein R is as previously defined and M is selected from the group consisting of 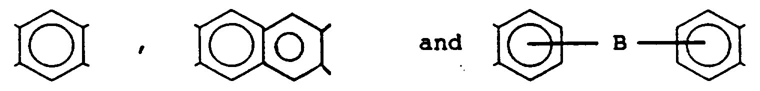 where B is -S- or 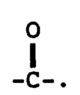 These polyetherimide copolymers and their preparation are described by Williams et al. in U.S. Patent 3,983,093, incorporated herein by reference.

The polyetherimides can be prepared by any of the methods well known to those skilled in the art, including the reaction of an aromatic bis(ether anhydride) of the formula 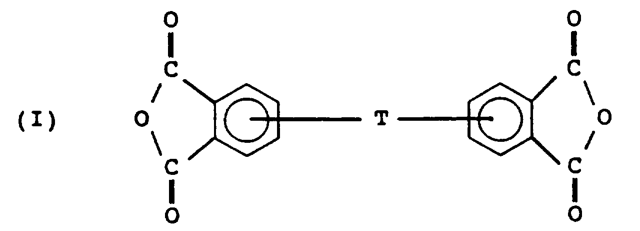 with an organic diamine of the formula

(II) H₂N-R-NH₂

wherein T and R are defined as described above.

Bis(ether anhydride)s of formula I include, for example,
1,3-bis(2,3-dicarboxyphenoxy)benzene dianhydride;
1,4-bis(2,3-dicarboxyphenoxy)benzene dianhydride;
1,3-bis(3,4-dicarboxyphenoxy)benzene dianhydride;
1,4-bis(3,4-dicarboxyphenoxy)benzene dianhydride; and
4,4'-bis(phthalic anhydride)ether.

A preferred class of aromatic bis(ether anhydride)s included by formula I includes compounds of formula III, IV and V, which follow: 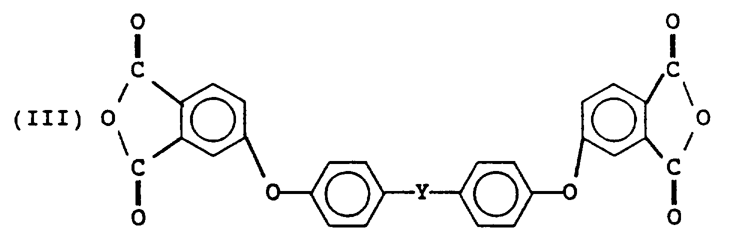 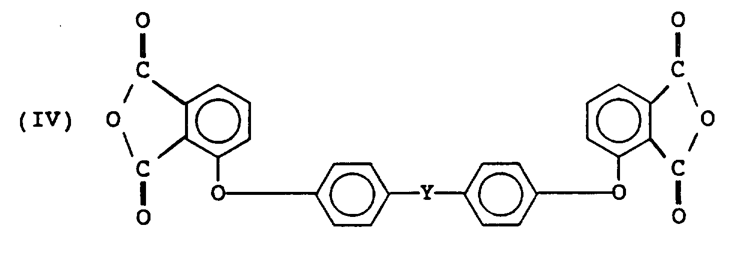 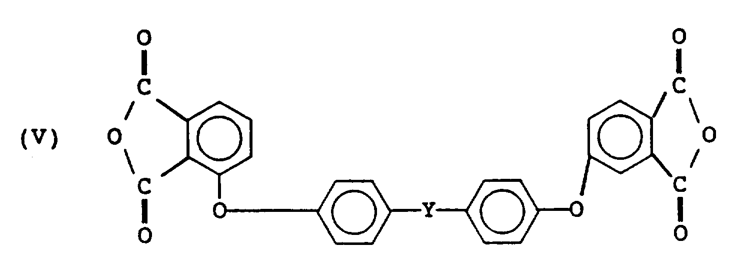 and mixtures thereof, where Y is selected from the group consisting of -O-, -S-, 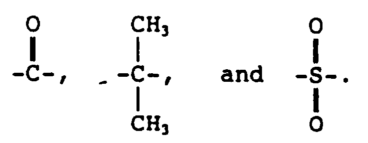 Aromatic bis(ether anhydride)s of formula III include, for example:
2,2-bis[4-(3,4-dicarboxyphenoxy)phenyl]propane dianhydride;
4,4'-bis(3,4-dicarboxyphenoxy)diphenyl ether dianhydride;
4,4'-bis(3,4-dicarboxyphenoxy)diphenyl sulfide dianhydride;
4,4,-bis(3,4-dicarboxyphenoxy)benzophenone dianhydride;
4,4'-bis(3,4-dicarboxyphenoxy)diphenyl sulfone dianhydride; and mixtures thereof.

Aromatic bis(ether anhydride)s of formula IV include, for example:
2,2-bis([4-(2,3-dicarboxyphenoxy)phenyl]propane dianhydride;
4,4'-bis(2,3-dicarboxyphenoxy)diphenyl ether dianhydride;
4,4'-bis(2,3-dicarboxyphenoxy)diphenyl sulfide dianhydride;
4,4,-bis(2,3-dicarboxyphenoxy)benzophenone dianhydride;
4,4'-bis(2,3-dicarboxyphenoxy)diphenyl sulfone dianhydride; and mixtures thereof.

The aromatic bis(ether anhydride)s of formula V may be, for example,
4-(2,3-dicarboxyphenoxy)-4'-(3,4-dicarboxyphenoxy)diphenyl-2,2-propane dianhydride;
4-(2,3-dicarboxyphenoxy)-4'-(3,4-dicarboxyphenoxy) diphenyl ether dianhydride;
4-(2,3-dicarboxyphenoxy)-4'-(3,4-dicarboxyphenoxy) diphenyl sulfide dianhydride;
4-(2,3-dicarboxyphenoxy)-4'-(3,4-dicarboxyphenoxy) benzophenone dianhydride;
4-(2,3-dicarboxyphenoxy)-4'-(3,4-dicarboxyphenoxy) diphenyl sulfone dianhydride, and mixtures thereof.

When polyetherimide/polyimide copolymers are employed, a dianhydride, such as pyromellitic anhydride, is used in combination with the bis(ether anhydride).

Some of the aromatic bis(ether anhydride)s of formula (I) are shown in U.S. patent 3,972,902 (Darrell Heath and Joseph Wirth). As described therein, the bis(ether anhydride)s can be prepared by the hydrolysis, followed by dehydration, of the reaction product of a nitrosubstituted phenyl dinitrile with a metal salt of dihydric phenol compound in the presence of a dipolar, aprotic solvent.

Additional aromatic bis(ether anhydride)s also included by formula (I) above are shown by Koton, M.M., Florinski, F.S., Bessonov, M.I. and Rudakov, A.P. (Institute of Heteroorganic Compounds, Academy of Sciences, U.S.S.R), U.S.S.R. patent 257,010, November 11, 1969, Appl. May 3, 1967, and by M.M. Koton, F.S. Florinski, Zh. Org. Khin. 4(5), 774 (1968).

The organic diamines of formula (II) include, for example:
m-phenylenediamine,
p-phenylenediamine,
4,4'-diaminodiphenylpropane,
4,4'-diaminodiphenylmethane (commonly named 4,4' methylenedianiline),
4,4'-diaminodiphenyl sulfide,
4,4'-diaminodiphenyl sulfone,
4,4'-diaminodiphenyl ether (commonly named 4,4'-oxydianiline),
1,5-diaminonaphthalene,
3,3-diamethylbenzidine,
3,3-dimethoxybenzidine,
2,4-bis(beta-amino-t-butyl)toluene,
bis(p-beta-amino-t-butylphenyl)ether,
bis(p-beta-methyl-o-aminophenyl)benzene,
1,3-diamino-4-isopropylbenzene,
1,2-bis(3-aminopropoxy)ethane,
benzidine,
m-xylylenediamine,
2,4-diaminotoluene,
2,6-diaminotoluene,
bis(4-aminocyclohexyl)methane,
3-methylheptamethylenediamine,
4,4-dimethylheptamethylenediamine,
2,11-dodecanediamine,
2,2-dimethylpropylenediamine,
octamethylenediamine,
3-methoxyhexamethylenediamine,
2,5-dimethylhexamethylenediamine,
2,5-dimethylheptamethylenediamine,
3-methylheptamethylenediamine,
5-methylnonamethylenediamine,
1,4-cyclohexanediamine,
1,12-octadecanediamine,
bis(3-aminopropyl)sulfide,
N-methyl-bis(3-aminopropyl)amine,
hexamethylenediamine,
heptamethylenediamine,
nonamethylenediamine,
decamethylenediamine, and mixtures of such diamines.

Preferred polyetherimides are available commercially from General Electric Company, Pittsfield, Massachusetts U.S.A. under the registered trademark ULTEM®.

The siloxane polyetherimide copolymers employed in the blends of this invention may be prepared in a manner similar to that used for polyetherimides, except that a portion or all of the organic diamine reactant is replaced by an amine-terminated organosiloxane of the formula 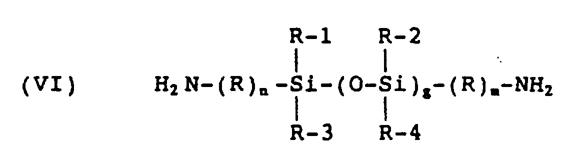 wherein n and m independently are integers from 1 to about 10, preferably from 1 to about 5, g is an integer from 5 to about 40, preferably from about 5 to about 25, R can be -CₓH₂ₓ- or phenyl and R-1 through R-4 each can be any of -H, -CH₃, -CₓH₂ₓCH₃ or phenyl.

The organic diamine of formula II and the amine-terminated organosiloxane of formula VI may be physically mixed prior to reaction with the bis(ether anhydride)(s), thus forming a substantially random copolymer. Alternatively, block or alternating copolymers may be used.

Preferred amine-terminated organosiloxanes are those of the formula VI, in which n and m are each 3, and which have a molecular weight distribution such that g has an average value ranging from about 9 to about 20.

The diamine component of the siloxane polyetherimide copolymers generally contains from about 20 to 50 mole % of the amine-terminated organosiloxane of formula VI and from about 50 to 80 mole % of the organic diamine of formula II. In preferred copolymers, the diamine component contains from about 30 to about 45 mole %, most preferably about 40 mole % of the amine-terminated organosiloxane.

The siloxane polyetherimide copolymers used in the blends of this invention can be prepared by any of the methods that are conventionally used for preparing polyetherimides. A presently preferred method for preparation is described in U.S. patent 4,417,044.

The preferred siloxane polyetherimide copolymers are available commercially from the General Electric Company under the registered trademarks, ULTEM® and SILTEM®.

The polycarbonates used in the blends of this invention are high molecular weight, thermoplastic, aromatic polymers and include homopolycarbonates, copolycarbonates and copolyestercarbonates and mixtures thereof which have average molecular weights of about 8,000 to more than 200,000, preferably of about 20,000 to about 80,000 and an intrinsic viscosity (I.V.) of from about 0.40 to about 1.5 dl/g as measured in methylene chloride at 25°C. In one embodiment, the polycarbonates are derived from dihydric phenols and carbonate precursors and generally contain the recurring structural units of the formula: 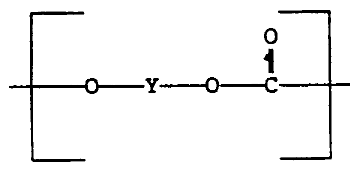 where Y is a divalent aromatic radical of the dihydric phenol employed in the polycarbonate-producing reaction.

Suitable dihydric phenols for producing the polycarbonates include, for example, 2,2-bis(4-hydroxyphenyl)propane, bis(4-hydroxyphenyl)methane, 2,2-bis(4-hydroxy-3-methylphenyl)propane, and 4,4'-bis(4-hydroxyphenyl)heptane, etc.

It is of course possible to employ two or more different dihydric phenols or a copolymer of a dihydric phenol with a glycol or with a hydroxy- or acid-terminated polyester, or with a dibasic acid in the event a carbonate copolymer or interpolymer rather than homopolymer is desired for use in the preparation of the blends of this invention. The blends of any of the above materials also can be employed to provide the aromatic polycarbonate. In addition, branched polycarbonates, such as are described in U.S. patent 4,001,184, can be utilized in the practice of this invention, as can blends of a linear polycarbonate and a branched polycarbonate.

The carbonate precursor employed can be either a carbonyl halide or a carbonate ester. The carbonyl halides which can be employed are carbonyl bromides, carbonyl chlorides and mixtures thereof. Typical of the carbonate esters which can be employed are diphenyl carbonate; a di(alkylphenyl)carbonate such as di(tolyl)carbonate, etc.; di(naphthyl)carbonate, etc. or mixtures thereof. While other carbonate precursors are known to those skilled in the art, carbonyl chloride, also known as phosgene, is preferred.

The polycarbonate also can be a copolyestercarbonate as described by Clayton B. Quinn in U.S. patent 4,430,484 and the references cited therein, incorporated herein by reference. Preferred polyestercarbonates are those derived from the dihydric phenols and carbonate precursors described above and aromatic dicarboxylic acids or their reactive derivatives. A very useful class of aromatic polyestercarbonates are those derived from bisphenol A; terephthalic acid or isophthalic acid or a mixture thereof and phosgene. If a mixture of terephthalic acid and isophthalic acid is employed, the weight ratio of terephthalic acid to isophthalic acid may be from about 5:95 to about 95:5.

The polycarbonates of the subject blends can be manufactured by known processes, such as for example, by reacting a dihydric phenol with a carbonate precursor, such as diphenyl carbonate or phosgene in accordance with methods set forth in the above-cited literature and U.S. patents 4,018,750 and 4,123,436 or by transesterification process such as are disclosed in U.S. patent 3,153,008, as well as other processes known to those skilled in the art.

The aromatic polycarbonates are typically prepared by employing a molecular weight regulator, an acid acceptor and a catalyst. The molecular weight regulators which can be employed include phenol, cyclohexanol, methanol, alkylated phenols, such as octylphenol, p-(t-butyl)phenol, etc. Preferably, phenol or an alkylated phenol is employed as the molecular weight regulator.

The acid acceptor can be either an organic or an inorganic acid acceptor. A suitable organic acid acceptor is a tertiary amine and includes such materials as pyridine, triethylamine, dimethylaniline, tributylamine, etc. The inorganic acid acceptor can be one which can be either a hydroxide, a carbonate, a bicarbonate or a phosphate of an alkali or alkaline earth metal.

The catalysts which can be employed are those that typically aid the polymerization of the monomer with phosgene. Suitable catalysts include tertiary amines such as triethylamine, tripropylamine, N,N-diethylamine, quaternary ammonium compounds such as, for example, tetraethylammonium bromide, cetyl triethyl ammonium bromide, tetra-n-heptyl ammonium iodide, tetra-n-propyl ammonium bromide, tetramethyl ammonium chloride, tetra-methyl ammonium hydroxide, tetra-n-butyl ammonium iodide, benzyltrimethyl ammonium chloride and quaternary phosphonium compounds such as, for example, n-butyltriphenyl phosphonium bromide and methyltriphenyl phosphonium bromide.

Also included are branched polycarbonates wherein a polyfunctional aromatic compound is reacted with the monomer and carbonate precursor to provide a thermoplastic randomly branched polycarbonate. Illustrative polyfunctional aromatic compounds which can be employed include trimellitic anhydride, trimellitic acid, pyromellitic acid, pyromellitic dianhydride, mellitic acid, mellitic anhydride, trimesic acid, benzophenonetetracarboxylic acid, benzophenonetetracarboxylic anhydride and the like. The preferred polyfunctional aromatic compounds are trimellitic anhydride and trimellitic acid.

The relative proportions of the polymeric components are within a defined range, as illustrated in Fig. 3a of the drawings. The blends of the present invention are represented substantially by the shaded area of the phase diagram shown in Fig. 3a. This area corresponds approximately to blends containing from about 0.5 to about 75 parts per hundred resin ("phr") polycarbonate, about 0.5 to about 26 phr siloxane polyetherimide copolymer and the balance polyetherimide, wherein the polyetherimide concentration is at least about 60% by weight of the blend. Preferred blends of this invention are represented by the shaded area on the phase diagram shown in Fig. 3b. This area corresponds approximately to blends containing from about 0.5 to about 35 phr polycarbonate, 0.5 to about 10 phr siloxane polyetherimide copolymer and the balance polyetherimide, wherein the polyetherimide concentration is at least about 73% by weight of the blend. Optimum flame retardant performance has been found to occur in blends in which the weight ratio of polyetherimide/siloxane polyetherimide copolymer is about 95/5.

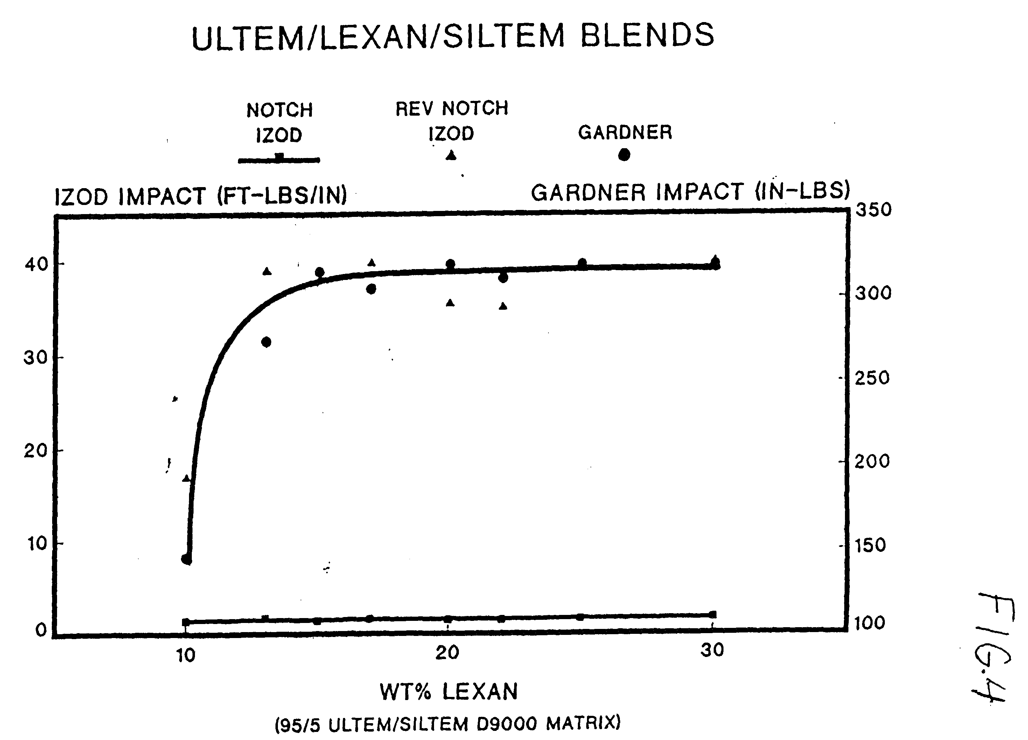

Figure 4 illustrate impact performance of the ternary blends of the present invention for the notched Izod, reverse notched Izod and Gardner impact tests. These tests were performed in accordance with accepted ASTM methods. The samples which were tested were composed of 95 parts by weight of a polyetherimide (ULTEM® 1000) and 5 parts by weight of a siloxane polyetherimide (ULTEM® D9000) with each test sample having variable amounts by weight of a polycarbonate (LEXAN® 131). The test results demonstrate that a polymer blend with a matrix comprising 95 parts of a polyetherimide and 5 parts of a siloxane polyetherimide copolymer shows improved impact results when a polycarbonate is added to the polymer in amounts of greater than about 10% by weight.

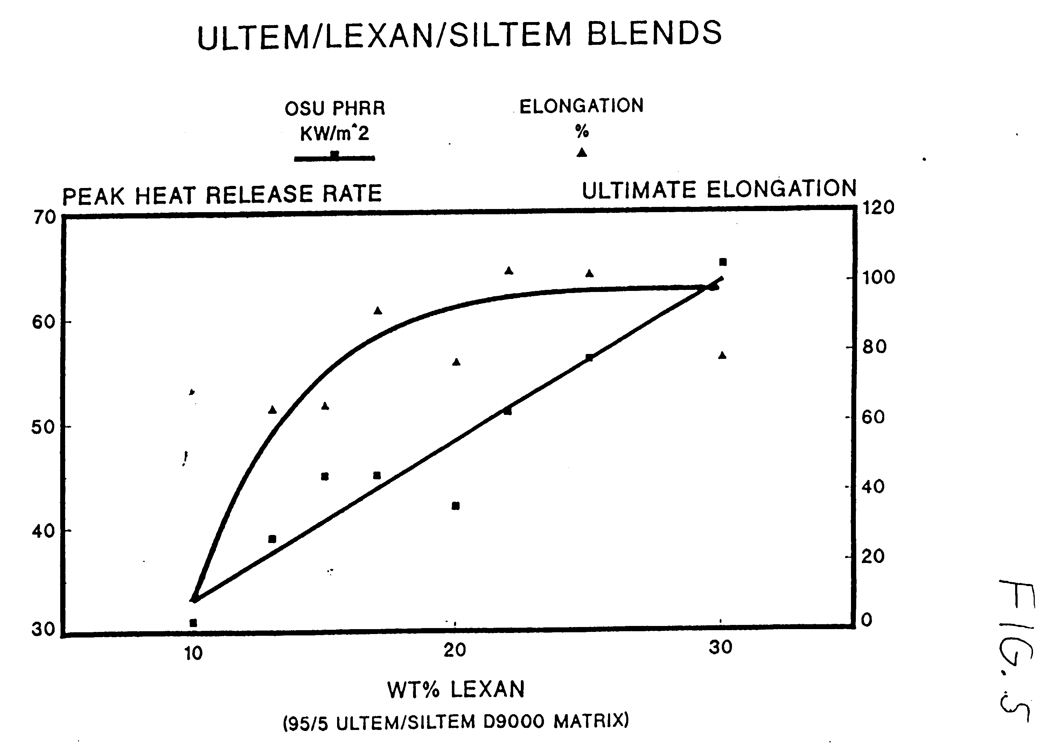

Figure 5 illustrates peak heat release rate and ultimate elongation in relation to the amount of polycarbonate blended with a matrix composed of 95 parts by weight of a polyetherimide and 5 parts by weight of a siloxane polyetherimide copolymer. As the amount of polycarbonate is increased in the ternary blend, the peak heat release rate increases. The ultimate elongation initially increases but begins to plateau as the amount of polycarbonate increases. Optimum peak heat release rate and ultimate elongation occur where the polycarbonate is at about 20% by weight of the ternary blend.

In addition to the polymeric ingredients, the blends may contain other materials, such as fillers, additives, reinforcing agents, and the like. The blends of the invention exhibit unexpected improvements in flame retardant performance and ductility over the engineering thermoplastics individually or in the currently used binary and ternary combinations. The blends also meet or exceed the flammability standards of Part 25 of Title 14 of the Code of Federal Regulations.

The following examples are provided only to illustrate the improved flame retardance and ductility of the present invention and are not intended to be limiting.

All compositions were prepared by dry blending the ingredients and extruding the mix using a screw-type extruder. The extrudate was comminuted into pellets and the pellets were injection molded into test specimens.

Except as described below, all of the heat and smoke release properties were determined by the Ohio State University (OSU) rate-of-heat-release apparatus and the National Bureau of Standards (NBS) Smoke Chamber, which are in accordance with the procedures set forth in Part 25 of 14 C.F.R.

The ultimate elongation (ULT STAIN) was performed in accordance with accepted ASTM methods.

### Examples 1-22

The test samples which were utilized, ULTEM® 1000 (polyetherimide), LEXAN® 131 (polycarbonate) and ULTEM® D9000 (siloxane polyetherimide copolymer) can be obtained from the General Electric Company, Pittsfield, Massachusetts, U.S.A.

From Table I, it is clear that the ternary blends of polyetherimide, polycarbonate and siloxane polyetherimide copolymer in the proportions within the scope of the present invention led to unexpected overall improvements in flame retardance and ductility. The OSU heat release values and the maximum smoke density (Dₛ MAX) values obtained by the compositions of the present invention were unexpectedly superior to those outside the scope of the present invention. Test samples 7, 8, 9, 10, 18, 19, 20 and 22, which have a polyetherimide to siloxane polyetherimide copolymer weight ratio of about 95:5 respectively, showed improved OSU heat release values and Dₛ MAX values in comparison to test samples 1 through 6 and 12 through 17, which do not have a polyetherimide to siloxane polyetherimide copolymer weight ratio of about 95:5. Heat release and maximum smoke density are very important for applications for use where flame resistance, slow burn and minimal smoke concentration are desired, as for example, in the construction of and furnishing of aircraft, ships and automobiles. The results indicate a surprisingly very slow heat release thus burn rate and a surprisingly low maximum smoke density under continuous exposure to a radiant source.

Several of the blends described in Table I show surprisingly good ULT STRAIN (ULT STR %) values. The unexpectedly improved ductility provides for a more desirable engineering thermoplastic which is less likely to crack from the day-to-day wear.

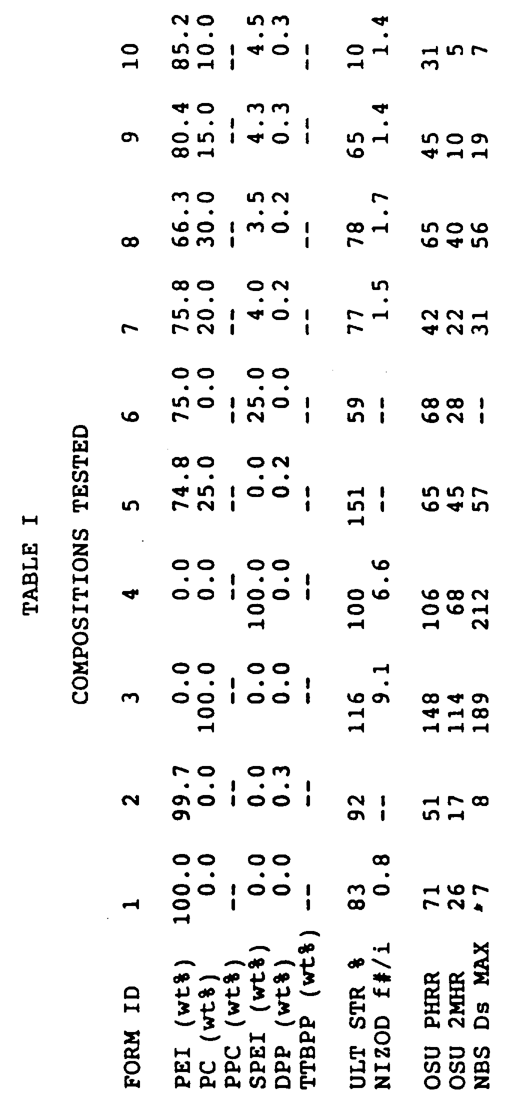

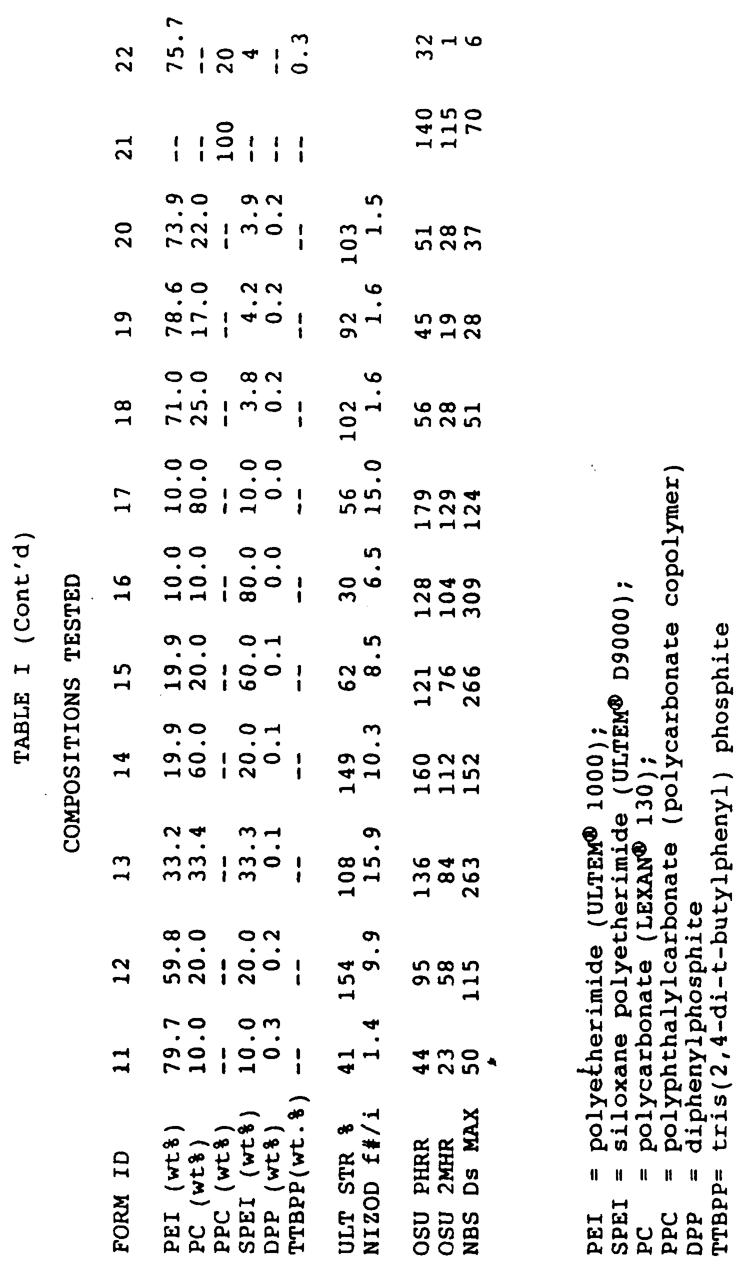

## Claims

1. A polyetherimide/polycarbonate/siloxane polyetherimide copolymer blend having increased flame resistance and ductility, comprising:
(a) at least 60% by weight of a polyetherimide;
(b) a polycarbonate;
(c) a siloxane polyetherimide copolymer;wherein the siloxane polyetherimide copolymer is present in an amount sufficient to provide a weight ratio of polyetherimide to siloxane polyetherimide copolymer of 95 to 5 and the remaining balance of the composition comprises the polycarbonate;further wherein the polyetherimide has the formula 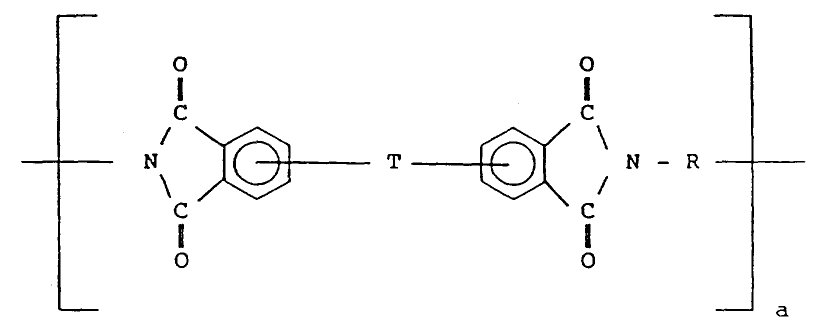 and the siloxane polyetherimide copolymer consists essentially of repeating units of the formula 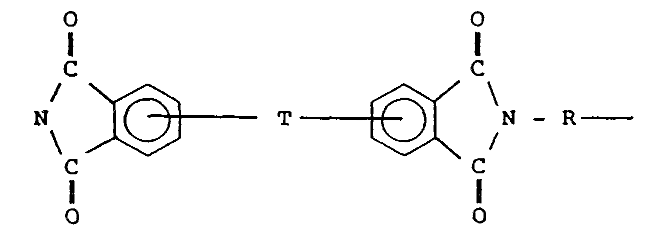 and repeating units of the formula 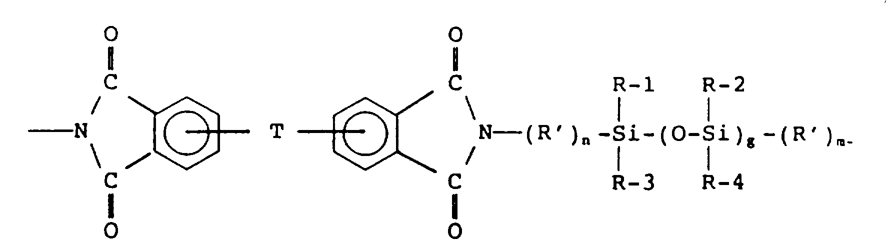 wherein R' is CₓH₂ₓ or phenyl; R-1, R-2, R-3 and R-4 independently are H, CH₃, CₓH₂ₓ CH₃ or phenyl;
where T is -S-, -O-, 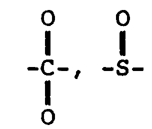 or CₓH₂ₓ or a group of the formula
-O-Z-O-
wherein the divalent bonds of the -O- or the -O-z-O-group are in the 3,3', 3,4', 4,3' or 4,4' positions; Z is a member of the class consisting of (A) 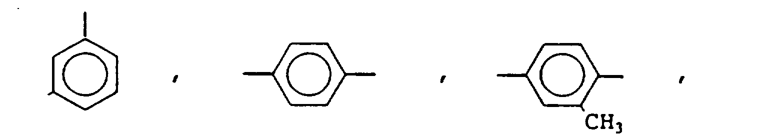 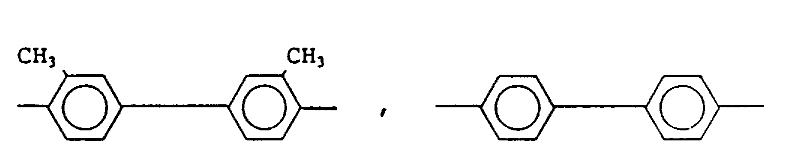 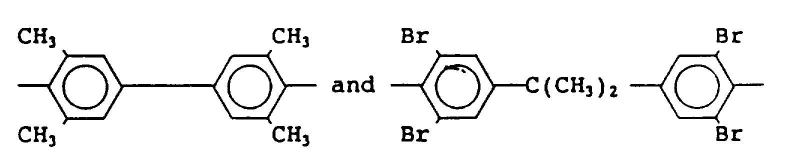 and (B) divalent organic radicals of the general formula 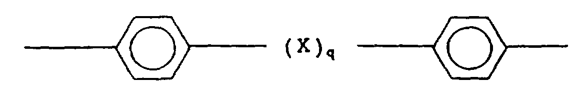 where X is a member selected from the group consisting of divalent radicals of the formulas 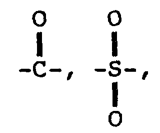 -O-, -S- and C_{y}H_{2y}
where y is an integer from 1 to 5; and R is a divalent organic radical selected from the group consisting of (a) aromatic hydrocarbon radicals having from 6 to 20 carbon atoms and halogenated derivatives thereof, (b) alkylene radicals having from 2 to 20 carbon atoms, cycloalkylene radicals having from 3 to 20 carbon atoms, and (c) divalant radicals of the general formula 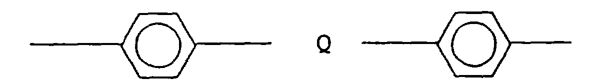 where Q is a member selected from the group consisting of -S-, -O-, 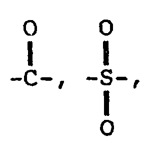 and -CₓH₂ₓ-,
x is an integer from 1 to 5, n and m independently are integers from 1 10 and g is an integer from 5 to 40.

2. The ternary polymer blend of claim 1, wherein the polyetherimide further comprises repeating units of the formula: 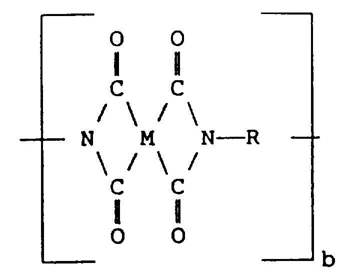 wherein b is a whole number greater than 1, M is: 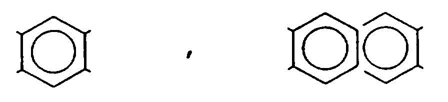 or 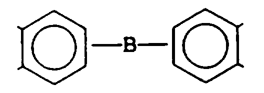 where B is -S- or

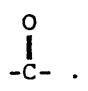

3. The ternary polymer blend of Claim 1 or Claim 2, wherein n and m are integers from 1 to 5, g is an integer from 5 to 25 and R-1, R-2, R-3 and R-4 are each methyl.

4. The ternary polymer blend of any preceding claim, wherein g has an average value from 9 to 20 and the organosiloxane-containing repeating unit constitutes from about 20 to 50 mole % of the siloxane polyetherimide copolymer.

5. The ternary polymer blend of any preceding claim, wherein the organosiloxane-containing repeating unit constitutes from 30 to 40 mole % of the siloxane polyetherimide copolymer.

6. The ternary polymer blend of any preceding claim, wherein the siloxane polyetherimide copolymer is a random copolymer, a block copolymer or an alternating copolymer.

7. The ternary polymer blend of any preceding claim, which further comprises fillers, pigments, reinforcing agents or mixtures thereof.

## Patentansprüche

1. Polyätherimid/Polycarbonat/Siloxan-Polyätherimidcopolymer-Mischung mit verbesserter Flammbeständigkeit und Duktilität, enthaltend:
(a) wenigstens 60 Gew.-% eines Polyätherimids;
(b) ein Polycarbonat;
(c) ein Siloxan-Polyätherimidcopolymer; worin das Siloxan-Polyätherimidcopolymer in einer Menge anwesend ist, die ausreicht, um ein Gewichtsverhältnis des Polyätherimids zum Siloxan-Polyätherimidcopolymeren von 95 bis 5 zu ergeben und der verbleibende Rest der Zusammensetzung das Polycarbonat umfaßt; worin weiterhin das Polyätherimid die Formel 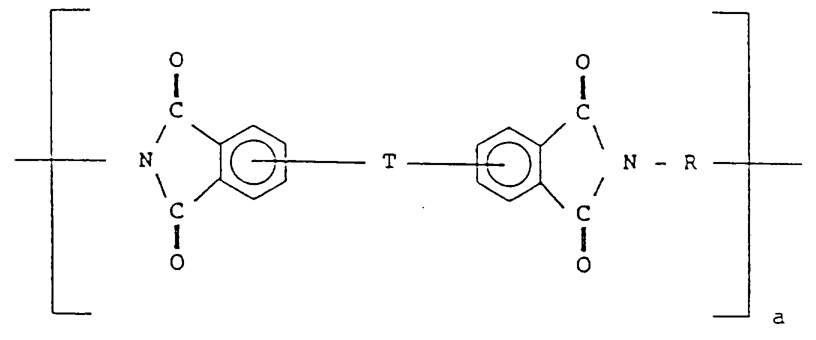 aufweist und das Siloxan-Polyätherimidcopolymer im wesentlichen aus wiederkehrenden Einheiten der Formel 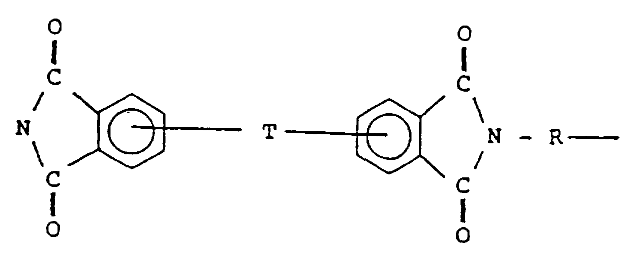 und wiederkehrenden Einheiten der Formel 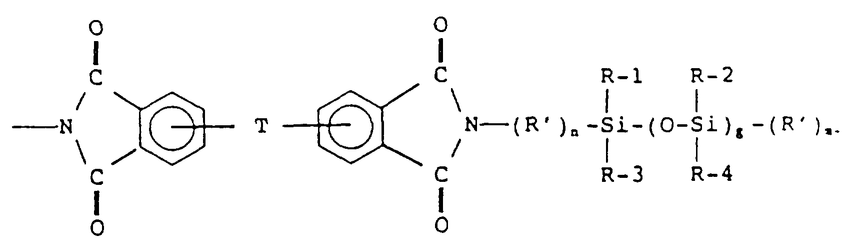 besteht, worin R' CₓH₂ₓ oder Phenyl ist; R-1, R-2, R-3 und R-4 unabhängig H, CH₃, CₓH₂ₓ CH₃ oder Phenyl ist;
worin T gleich -S-, -O-, 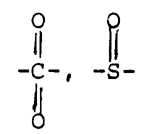 oder CₓH₂ₓ
oder eine Gruppe der Formel
-O-Z-O-
ist, worin die zweiwertigen Bindungen der -O- oder der -O-Z-O-Gruppe in den 3,3', 3,4', 4,3' oder 4,4' Positionen angeordnet sind; Z ein Glied ist aus der Klasse bestehend aus 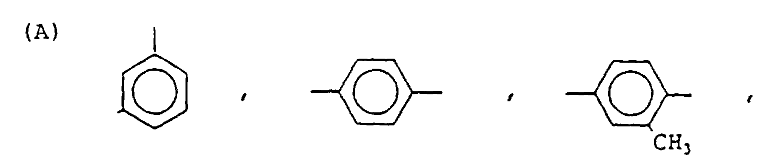 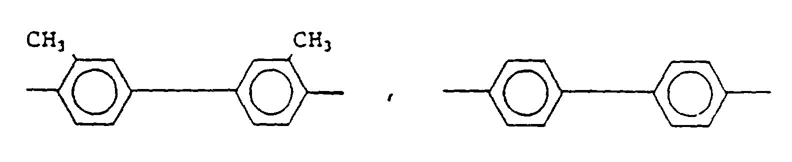 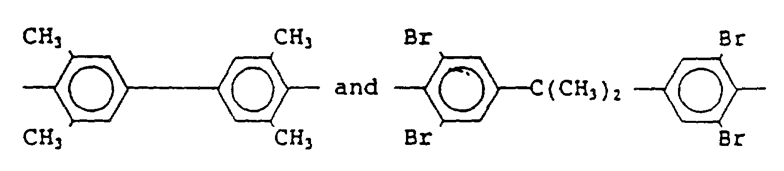 und (B) zweiwertigen organischen Resten der allgemeinen Formel 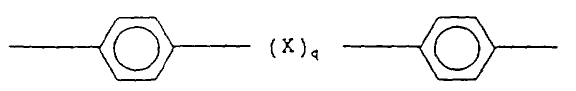 worin X ein Glied ist ausgewählt aus der Gruppe bestehend aus zweiwertigen Resten der Formel 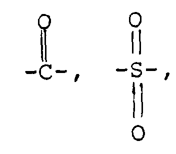 -O-, -S- und C_{y}H₂
worin y eine ganze Zahl von 1 bis 5 ist; und R ein zweiwertiger organischer Rest ist ausgewählt aus der Gruppe bestehend aus (a) aromatischen Kohlenwasserstoffresten mit 6 bis 20 Kohlenstoffatomen und halogenierten Derivaten derselben, (b) Alkylenresten mit 2 bis 20 Kohlenstoffatomen, Cycloalkylenresten mit 3 bis 20 Kohlenstoffatomen und (c) zweiwertigen Resten der allgemeinen Formel 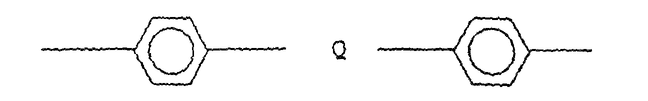 worin Q ein Glied ist ausgewählt aus der Gruppe bestehend aus -S-, -O-, 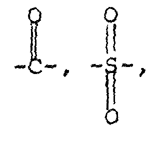 und -CₓH₂ₓ-,
x eine ganze Zahl von 1 bis 5 ist, n und m unabhängig ganze Zahlen von 1 bis 10 darstellen und g eine ganze Zahl von 5 bis 40 ist.

2. Ternäre Polymermischung nach Anspruch 1, worin das Polyätherimid weiterhin wiederkehrende Einheiten der Formel: 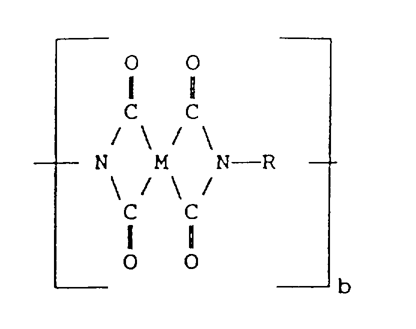 umfaßt, worin b eine ganze Zahl größer als 1 ist, M 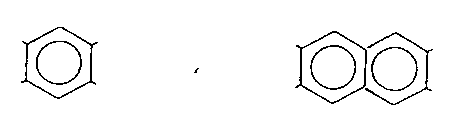 oder 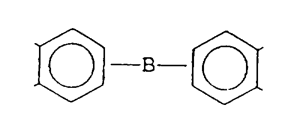 ist,
worin B -S- oder 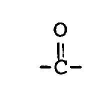 ist.

3. Ternäre Polymermischung nach Anspruch 1 oder Anspruch 2, worin n und m ganze Zahlen von 1 bis 5 sind, g eine ganze Zahl von 5 bis 25 ist und R-1, R-2, R-3 und R-4 jeweils Methyl sind.

4. Ternäre Polymermischung nach einem der vorausgehenden Ansprüche, worin g einen mittleren Wert von 9 bis 20 aufweist und die Organosiloxan-haltige wiederkehrende Einheit etwa 20 bis 50 Mol-% des Siloxan-Polyätherimid-Copolymeren darstellt.

5. Ternäre Polymermischung nach einem der vorausgehenden Ansprüche, worin die Organosiloxan-haltige wiederkehrende Einheit 30 bis 40 Mol-% des Siloxan-Polyätherimid-Copolymeren darstellt.

6. Ternäre Polymermischung nach einem der vorausgehenden Ansprüche, worin das Siloxan-PolyätherimidCopolymer ein willkührliches Copolymer, ein Blockcopolymer oder ein abwechselndes Copolymer ist.

7. Ternäre Polymermischung nach einem der vorausgehenden Ansprüche, welche weiterhin Füllstoffe, Pigmente, verstärkende Mittel oder Mischungen derselben umfaßt.

## Revendications

1. Mélange de polyétherimide, de polycarbonate et de copolymère siloxane-polyétherimide, présentant une résistance accrue à l'inflammation et une ductilité accrue, comprenant :
(a) au moins 60 % en poids d'un polyétherimide,
(b) un polycarbonate,
(c) un copolymère siloxane-polyétherimide,
le copolymère siloxane-polyétherimide étant présent en une quantité suffisante pour fournir un rapport en poids du polyétherimide au copolymère siloxane-polyétherimide de 95 à 5 et le restant de la composition renfermant le polycarbonate,
ledit polyétherimide répondant en outre à la formule : 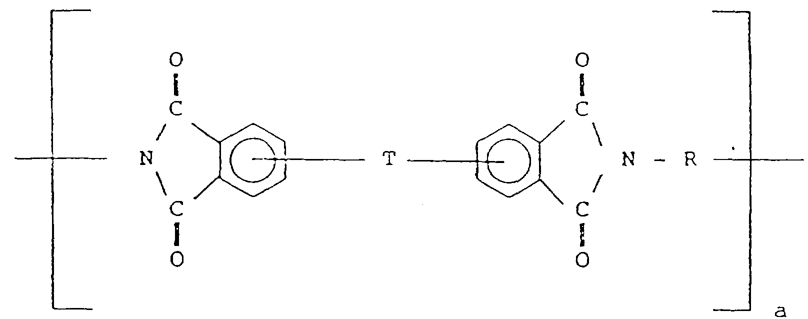 et le copolymère siloxane-polyétherimide étant constitué essentiellement de motifs de formule : 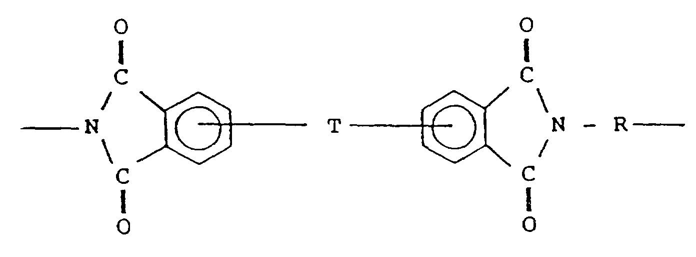 et de motifs de formule : 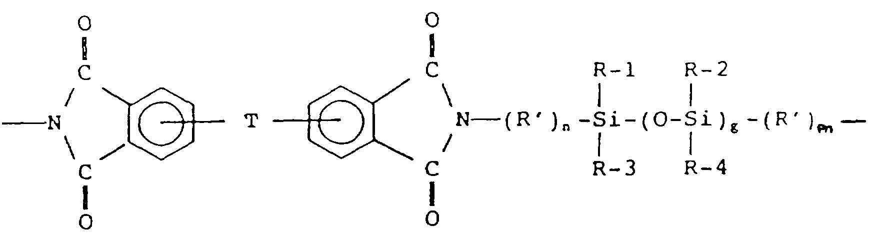 formules dans lesquelles R' représente un groupe CₓH₂ₓ ou phénylène, R-1, R-2, R-3 et R-4 représentent chacun, indépendamment, un atome d'hydrogène ou un groupe CH₃, CₓH₂ₓCH₃ ou phényle, T représente un groupe -S-, -O-, 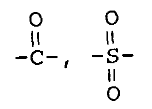 ou CₓH₂ₓ, ou un groupe de formule
-O-Z-O-, les deux liaisons du groupe divalent -O- ou -O-Z-O- étant fixées en position 3 et 3', 3 et 4', 4 et 3' ou 4 et 4', Z représente un groupe choisi parmi les groupes (A) : 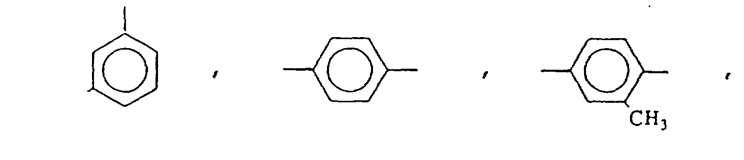 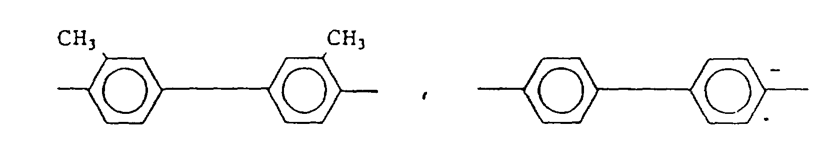 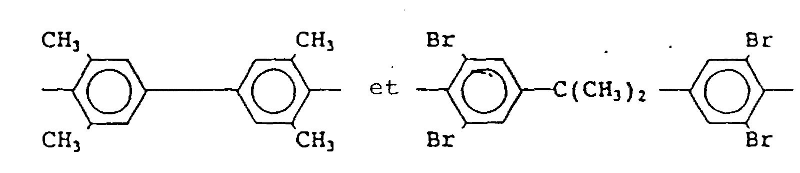 et les groupes organiques divalents (B) de formule générale : 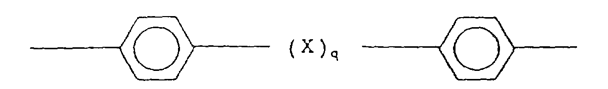 dans laquelle X représente un groupe choisi parmi les groupes divalents de formule : 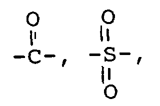 -O-, -S- et C_{y}H_{2y},
y représentant un nombre entier égal à 1 à 5,
R représente un groupe organique divalent, choisi parmi (a) les groupes hydrocarbonés aromatiques ayant de 6 à 20 atomes de carbone et leurs dérivés halogénés, (b) les groupes alkylène ayant de 2 à 20 atomes de carbone et les groupes cycloalkylène ayant de 3 à 20 atomes de carbone, et (c) les groupes divalents de formule générale : 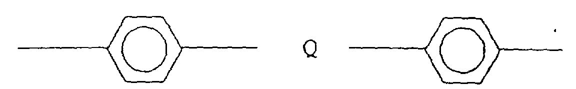 dans laquelle Q représente un groupe choisi parmi les groupes -B-, -O-, 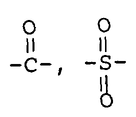 et CₓH₂ₓ,
x représente un nombre entier égal à 1 à 5, n et m représentent chacun, indépendamment, un nombre entier égal à 1 à 10 et g représente un nombre entier égal à 5 à 40.

2. Mélange ternaire de polymères selon la revendication 1, dans lequel le polyétherimide renferme en outre des motifs de formule : 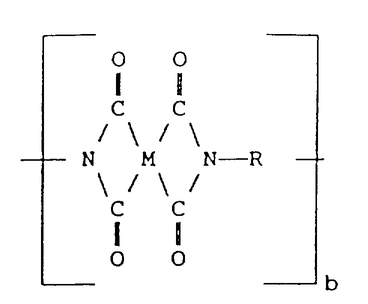 dans laquelle b représente un nombre entier supérieur à 1 et M représente un groupe de formule : 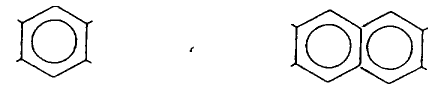 ou 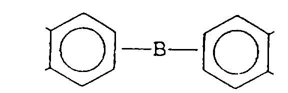 B représentant un groupe -S- ou

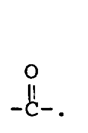

3. Mélange ternaire de polymères selon la revendication 1 ou 2, dans lequel m et n représentent chacun un nombre entier égal à 1 à 5, g représente un nombre entier égal à 5 à 25, et R-1, R-2, R-3 et R-4 représentent chacun un groupe méthyle.

4. Mélange ternaire de polymères selon l'une quelconque des revendications précédentes, dans lequel g a une valeur moyenne de 9 à 20 et les motifs contenant de l'organosiloxane constituent d'environ 20 à environ 50 % en moles du copolymère siloxane-polyétherimide.

5. Mélange ternaire de polymères selon l'une quelconque des revendications précédentes, dans lequel les motifs contenant de l'organosiloxane constituent de 30 à 40 % en moles du copolymère siloxane-polyétherimide.

6. Mélange ternaire de polymères selon l'une quelconque des revendications précédentes, dans lequel le copolymère siloxane-polyétherimide est un copolymère statistique, un copolymère à blocs ou un copolymère alterné.

7. Mélange ternaire de polymères selon l'une quelconque des revendications précédentes, qui renferme en outre des charges, des pigments, des agents de renforcement ou un mélange de tels produits.
